# EUROPÄISCHE PATENTANMELDUNG

(11) **EP 4 123 042 A1**
(43) Veröffentlichungstag der Anmeldung: **25.01.2023**
(21) Anmeldenummer: 22184786.6
(22) Anmeldetag: 13.07.2022
(51) Int. Cl.: C22C 9/04, F04B 1/00

(54) **BLEIFREIE MESSINGLEGIERUNG UND VERWENDUNG DERSELBEN**

(30) Priorität: 21.07.2021 DE 102021118907
(71) Anmelder: Diehl Brass Solutions Stiftung & Co. KG, 90552 Röthenbach (DE)
(72) Erfinder: Seuß, Florian, 91080 Spardorf (DE); Dehnelt, Alexander, 90403 Nürnberg (DE); Bräutigam, Volker, 91054 Erlangen (DE)
(74) Vertreter: Diehl Patentabteilung

(57) **Zusammenfassung**

Die Erfindung betrifft eine bleifreie Messinglegierung, enthaltend 57,0 bis 60,0% Cu, 1,0 bis 2,0% AI, 1,5 bis 2,5% Mn, 0,1 bis 1,0% Fe, höchstens 0,5% Ni, höchstens 0,5% Sn, 0,5 bis 2,0% Si, weniger als 0,1% Pb, Rest Zn sowie unvermeidbare Verunreinigungen, wobei das Kupferäquivalent (CuÄq) im Bereich von 52,0 bis 58,0% liegt.

## Beschreibung

Die Erfindung betrifft eine bleifreie Messinglegierung sowie eine Verwendung derselben.

Aus der US 10,287,653 B2 ist eine bleifreie Messinglegierung bekannt, deren Zusammensetzung dort im Patentanspruch 1 wiedergegeben ist. Die bekannte Messinglegierung weist ein Zinkäquivalent im Bereich von 51% bis etwa 58% auf. Die vorgeschlagene Messinglegierung eignet sich insbesondere zur Herstellung von Lagern für Turbolader.

In der Industrie besteht ein Bedarf an einer bleifreien Messinglegierung, welche sich insbesondere zur Herstellung von Bauteilen von Hydraulikpumpen und -komponenten eignet.

Aufgabe der Erfindung ist es, eine bleifreie Messinglegierung anzugeben, welche sich durch eine gute Zerspanbarkeit, Notlaufeigenschaften, Ölverträglichkeit u. dgl. auszeichnet. Die Messinglegierung soll insbesondere zur Herstellung von Bauteilen für Hydraulikpumpen und -komponenten geeignet sein.

Diese Aufgabe wird durch die Merkmale der Patentansprüche 1 und 7 gelöst. Zweckmäßige Ausgestaltungen ergeben sich aus den Merkmalen der abhängigen Patentansprüche.

Nach Maßgabe der Erfindung wird eine bleifreie Messinglegierung vorgeschlagen, enthaltend 57,0 bis 60,0% Cu, 1,0 bis 2,0% Al, 1,5 bis 2,5% Mn, 0,1 bis 1,0% Fe, höchstens 0,5% Ni, höchstens 0,5% Sn, 0,5 bis 2,0% Si, weniger als 0,1% Pb, Rest Zn sowie unvermeidbare Verunreinigungen, wobei das Kupferäquivalent (CuÄq) im Bereich von 52,0 bis 58,0% liegt.

Das angegebene Kupferäquivalent (CuÄq) wird wie folgt berechnet:
1)
   Wenn Si_{frei} = Si · 3,26 - (Fe+Mn) < 0
   dann CuÄq = Cu / {[100 - Fe - Mn + (|Si_{frei}|·0,7) - Al + (Al.6) - Si)] / 100}
2)
   Wenn Si_{frei} = Si · 3,26 - (Fe+Mn) > 0
   dann CuÄq = Cu / {[100 - Fe - Mn - Al + (Al.6) - Si + ((Si_{frei}/3,26)·10)] / 100}

Cu: % Kupfer
Fe: % Eisen
Al: % Aluminium
Si: % Silizium

Im Rahmen der vorliegenden Beschreibung werden unter [%] Gewichts-Prozent verstanden.

Bei der obigen Berechnung des Kupferäquivalents CuÄq werden zwei Fälle Ziff. 1 und 2 unterschieden. Im Fall Ziff. 1 liegt in der Legierung kein freies Silizium Si_{frei} vor. In diesem Fall bindet das in der Legierung enthaltene Silizium vollständig mit Fe und/oder Mn. Es bilden sich Fe-Mn-Si intermetallische Verbindungen.

Im Fall Ziff. 2 liegt in der Legierung freies Silizium Si_{frei} vor. Die Unterscheidung zwischen dem ersten und dem zweiten Fall ist erforderlich, weil durch in der Legierung vorliegendes freies Silizium Si_{frei} eine starke Verschiebung im Phasendiagramm in Richtung der β-Phase bewirkt wird. In diesem Fall ist die Verschiebung im Phasendiagramm in Richtung β-Phase etwa um den Faktor 10 stärker als im Fall des Vorliegens von vollständig gebundenem Silizium (siehe oben Berechnung Fall Ziff. 1).

Es hat sich gezeigt, dass die vorgeschlagene Messinglegierung mit einem Kupferäquivalent CuÄq im Bereich 52,0 bis 58,0% gegenüber herkömmlichen bleihaltigen Legierungen vergleichbare Reibeigenschaften aufweist. Ferner zeichnet sich die vorgeschlagene bleifreie Messinglegierung durch eine gute Zerspanbarkeit, Notlaufeigenschaften, Ölverträglichkeit u. dgl. aus.

Nach einer vorteilhaften Ausgestaltung ist Si in einer Menge von höchstens 1,0% enthalten. Damit wird ein besonders geeigneter Gehalt an β-Phase eingestellt.

Nach einer weiteren Ausgestaltung ist Sn in einer Menge von höchstens 0,2%, vorzugsweise höchstens 0,1%, besonders bevorzugt weniger als 0,06%, enthalten. Sn erhöht die Relaxationsbeständigkeit der Legierung.

Die vorgeschlagene bleifreie Messinglegierung kann Nickel in einer Menge von höchstens 1,0%, vorzugsweise höchstens 0,5%, enthalten. Ferner kann Fe in einer Menge von höchstens 0,5%, vorzugsweise höchstens 0,4%, enthalten sein. Mn kann in einer Menge von höchstens 2,1% enthalten sein. Die Zugabe der vorgenannten Elemente dient der Ausbildung intermetallischer Phasen in der Legierung. Intermetallische Phasen verbessern die Verschleißfestigkeit sowie die Zähigkeit der Legierung.

Nach weiterer Maßgabe der Erfindung wird eine Verwendung der erfindungsgemäßen bleifreien Messinglegierung zur Herstellung von Bauteilen für Hydraulikpumpen und - komponenten vorgeschlagen. Die Bauteile können insbesondere aus der folgenden Gruppe ausgewählt sein: Gleitschuh, Verteilerplatte, Haltesegment, Lagerbuchse.

Die Eignung der vorgeschlagenen Messinglegierung zur Herstellung von Bauteilen für Hydraulikpumpen und -komponenten ergibt sich insbesondere aus deren guten Reibeigenschaften.

Nach einem Ausführungsbeispiel der Erfindung ist die erfindungsgemäße Legierung beispielweise wie folgt zusammengesetzt:

| Legierungsbestandteil | Gew.% |
|---|---|
| Cu | 57,96 |
| Al | 1,56 |
| Mn | 1,94 |
| Fe | 0,36 |
| Ni | 0,06 |
| Sn | 0,01 |
| Si | 0,59 |
| Pb | 0,02 |

Die Legierung mit der oben angegebenen Zusammensetzung weist die in der nachfolgenden Tabelle ausgewiesenen Eigenschaften auf:

| **Eigenschaften** | **Reibwert/ Verschleiß** |
|---|---|
| **Reibwert geschmiert** | 0,11 |
| Tauchschmierung in einem Spirax/Fusus Gemisch im Verhältnis 3 zu 1 bei 95°C unter einer Flächenlast von 52 N·mm⁻² und einer Reibgeschwindigkeit von 1,65 m/s im Pin on Disc Verfahren | |
| **Verschleiß geschmiert in km/g** | 226 km/g |
| Tauchschmierung in einem Spirax/Fusus Gemisch im Verhältnis 3 zu 1 bei 95°C unter einer Flächenlast von 52 N·mm⁻², einer Reibgeschwindigkeit von 1,65 m/s und einer Strecke von 2500 m im Pin on Disc Verfahren | |
| **Reibwert trocken** | 0,20 |
| unter einer Flächenlast von 10 N·mm⁻² und einer Reibgeschwindigkeit von 0,55 m/s im Pin on Disc Verfahren | |
| **Verschleiß trocken in km/g** | 121 km/g |
| unter einer Flächenlast von 10 N·mm⁻² und einer Reibgeschwindigkeit von 0,55 m/s für 250 m im Pin on Disc Verfahren | |

Die erfindungsgemäße Legierung eignet sich wegen ihrer guten Reibeigenschaften besonders zur Herstellung von Hydraulikpumpen und -komponenten, insbesondere Gleitschuhen, Verteilerplatten, Haltesegmenten und Lagerbuchsen.

## Patentansprüche

1. Bleifreie Messinglegierung, enthaltend
57,0 bis 60,0% Cu,
1,0 bis 2,0% Al,
1,5 bis 2,5% Mn,
0,1 bis 1,0% Fe,
höchstens 0,5% Ni,
höchstens 0,5% Sn,
0,5 bis 2,0% Si,
weniger als 0,1% Pb,
Rest Zn sowie
unvermeidbare Verunreinigungen,
wobei das Kupferäquivalent (CuÄq) im Bereich von 52,0 bis 58,0% liegt.

2. Bleifreie Messinglegierung nach Anspruch 1,
wobei Si in einer Menge von höchstens 1,0% enthalten ist.

3. Bleifreie Messinglegierung nach einem der vorhergehenden Ansprüche, wobei Sn in einer Menge von höchstens 0,2%, vorzugsweise höchstens 0,1%, besonders bevorzugt weniger als 0,06%, enthalten ist.

4. Bleifreie Messinglegierung nach einem der vorhergehenden Ansprüche, wobei Ni in einer Menge von höchstens 1,0%, vorzugsweise höchstens 0,5%, enthalten ist.

5. Bleifreie Messinglegierung nach einem der vorhergehenden Ansprüche, wobei Fe in einer Menge von höchstens 0,5%, vorzugsweise höchstens 0,4%, enthalten ist.

6. Bleifreie Messinglegierung nach einem der vorhergehenden Ansprüche, wobei Mn in einer Menge von höchstens 2,1% enthalten ist.

7. Verwendung der bleifreien Messinglegierung nach einem der vorhergehenden Ansprüche zur Herstellung von Bauteilen für Hydraulikpumpen und - komponenten.

8. Verwendung nach Anspruch 7,
wobei die Bauteile ausgewählt sind aus der folgenden Gruppe: Gleitschuh, Verteilerplatte, Haltesegment, Lagerbuchse.
